# EUROPEAN PATENT SPECIFICATION

(11) **EP 2 732 704 B1**
(45) Date of publication and mention of the grant of the patent: **29.04.2020**
(21) Application number: 12007712.8
(22) Date of filing: 14.11.2012
(51) Int. Cl.: A01M 25/00

(54) **Bait station**
Köderfalle
Station d'appât

(43) Date of publication of application: 21.05.2014
(73) Proprietor: Plastdiversity, Lda, 3091-902 Marinha das Ondas (PT)
(72) Inventor: Francisco, Moisés, 3090-485 Marinha Das Ondas (PT)
(74) Representative: Ostertag & Partner Patentanwälte mbB

(56) References cited:
- EP-A2- 1 057 958
- WO-A1-2010/033908
- WO-A1-2012/114263
- CN-Y- 200 944 808
- US-A- 4 730 412
- US-A1- 2004 205 994
- US-B1- 6 389 738

## Description

The invention relates to a bait station that is useful in the fighting of vermin.

One way of fighting vermin consists in making them eat substances which contain poisonous ingredients. The problem which such bait is that the bait can also be eaten by other animals that are not to be killed or even human beings.

Thus this possibility must be excluded, which can be done by providing an essentially closed housing and putting the poisonous bait therein, the housing having doors allowing the vermin to access the bait.

A further object is to charge the housing with bait material in easy and reliable manner.

A bait station is disclosed in WO201/033908 A1. This bait station has a housing including a base and a lid. For servicing this bait station, the housing is opended and a bait material may be put into it or a trapped rodent may be removed. Another bait station comprising the features of the preamble of claim 1 is known e.g. CN 200 944 808 Y.

The above objects are solved in accordance with the present invention with bait stations having the features in the main claim and the subclaims, respectively.

The invention will be better understood by a description of a preferred embodyment shown in the enclosed drawings. Therein
- Figure 1:: is a perspective view of the lower part of a bait station, which normally is closed by a convex cover part;

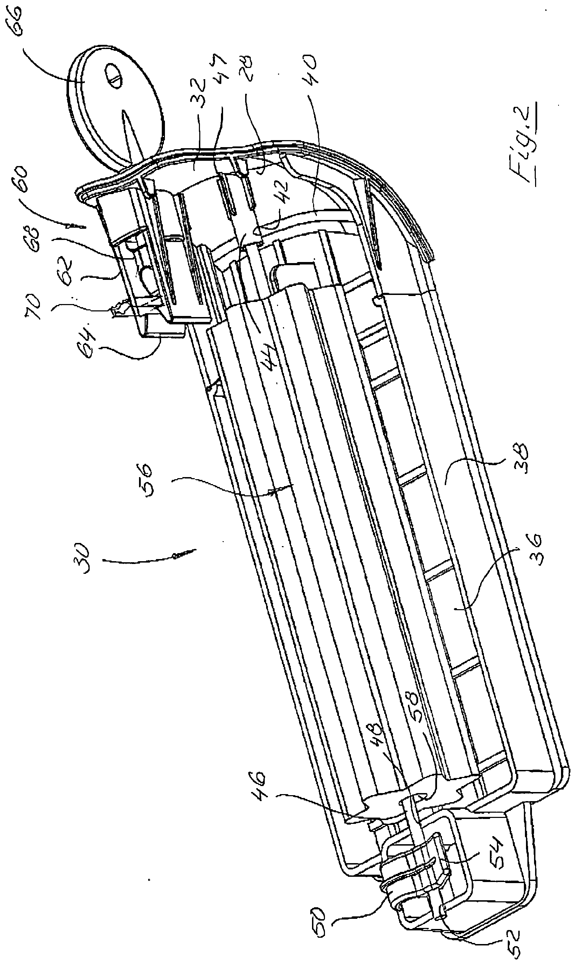

- Figure 2:: is a perspective view of a drawer holding a bait; and

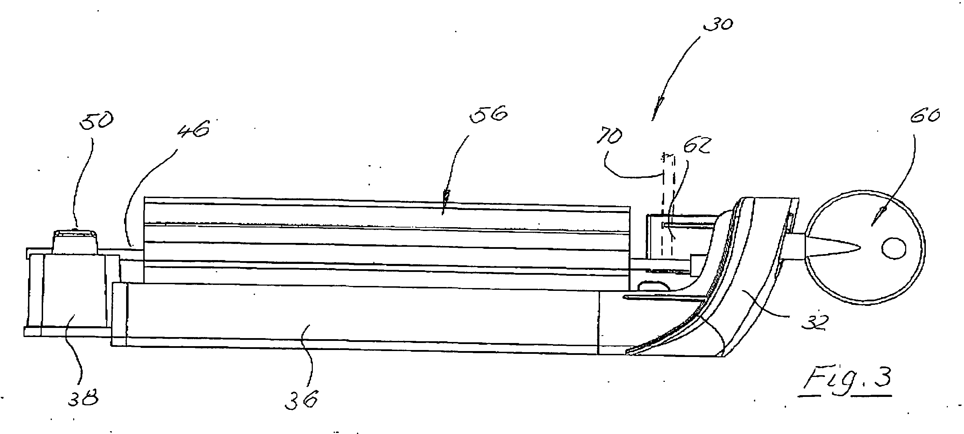

- Figure 3:: is a side elevational view of a drawer holding a bait.

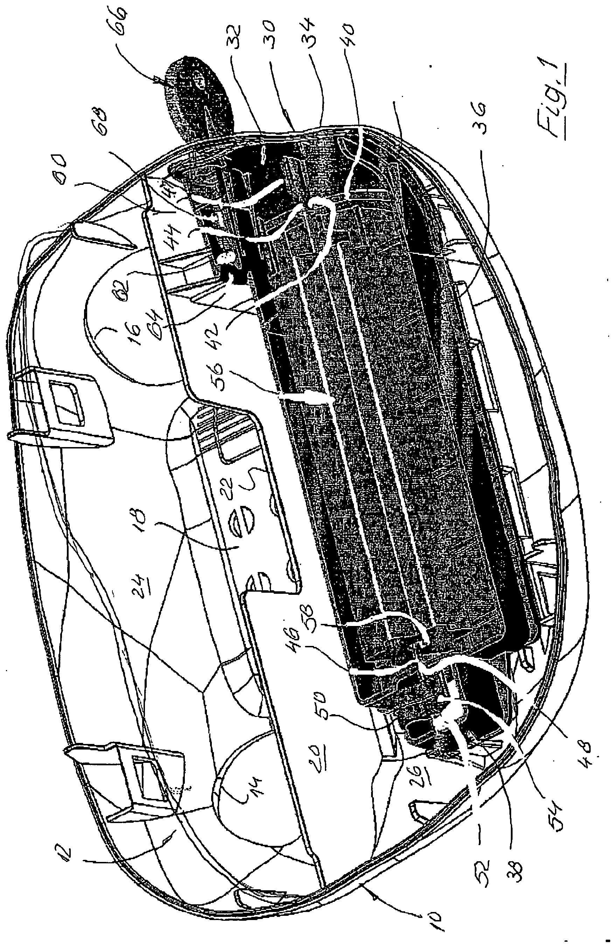

In Figure 1 10 is the lower part of a housing of a bait station. The upper side of a lower housing part 10 is closed by an upper housing part 12, a part of which is indicated in outline only. The lower housing part 10 has two opposing doors 14, 16 arranged in a lower curved wall portion of the housing part 10 close to the junction to a bottom 18 wall of the lower housing part 10.

Essentially in the median longitudinal plane there is a separating wall 20, which in vertical direction extends up to the upper housing part 12.

The central part of the separating wall 20 is provided with a cutout 22 forming a connection between an animal receiving chamber 24 and a bait receiving chamber 26 defined by the separating wall 20 and the housing 10, 12.

The bait receiving chamber 26 has in its right hand portion an opening 28 receiving a drawer 30. The drawer 30 has a right hand end wall 32 forming a flush continuation of the circumferential wall 34 of the lower housing part 10.

The drawer 30 further has a tray portion 36 of rectangular outline when seen from above.

The tray portion 36 has a left hand extension 38 and a right end wall 40.

The right hand end wall 40 has a semicircular cutout 42 receiving one end of a journaling member 44 of a bait holding rod 46. The journaling member 44 is a one piece plastic member of cylindrical geometry and has four radial ribs 47 formed on the right hand outer surface thereof.

The left hand end of the holding rod 46 is journaled in semicircular cutouts 48 of the drawer 30. A leaf spring member 50 has a semicircular cutout 52 cooperating with the upper circumferential surface of the holding rod 46 and an inclined ramp portion 54 facilitating inserting of the holding rod 46 into the journal formed by the cutouts 48 and 52 as well as the leaf spring member 50.

The holding rod 46 carries a bait product 56. The bait product 46 is of prismatic shape and has a central bore 58 receiving the holding rod 46. The circumferential wall of the bait product 46 is undulated in star like manner.

The end wall 40 of the drawer 30 further carries a lock structure 60 comprising two axial plate portions 62 each having a hook portion 64.

A key 66 is rotatably carried by the end wall 40. It has a cam portion 68 of essentially elliptic shape.

The hook portion 64 cooperates with a plate portion 70 formed integral with the upper housing part 12.

Under operating conditions the lower housing part 10 is closed by the upper housing part 12. Rats or mice can enter through either of the doors 14, 16 and have acces to the bait product 56 via the opening 28. They eat from the poisonous bait and will leave the bait station by one of the doors 14, 16. The bait will then become effective and the mouse or rat will die, normally at a place which is remote from the bait station.

It is obvious, that the bait product 56 is not accessible for other, larger animals or for humans.

For replacing the bait product 56 the key 66 is rotated so that the hook portions 64 come free from the plate portion 70. Now the drawer 30 can be drawn out of the housings 10 and the holding rod 46 can be drawn out of its two radial bearings overcoming the action of the leaf spring member 50. Now remnants of the bait product 56 can be removed from the holding rod 46 by just letting it drop down under gravity.

Then a new bait product 56 is slid over the holding rod 46 which then is reinserted in its journal bearing, where it is fixed under the action of the leaf spring member 50.

Thereafter the drawer 30 will be pushed back into the lower housing part 10 and the bait station is ready for further use.

From the above it is clear that the invention provides for an easy to operate and safe bait station, which can be produced from a small number of one piece injection moulded parts.

## Claims

1. A bait station comprising an essentially closed housing (10, 12), the wall of which is formed with at least one entrance (14, 16), bait holding means (46) being provided in the housing (10, 12), wherein the bait holding means (46) is carried by an insert member (30),
wherein the insert member (30) is formed as a drawer (30), said drawer (30) being releasably connected to the housing (10, 12), and
wherein connecting means (62, 64, 70) are provided for releasably fixing the drawer (30) on the housing (10, 12),
**characterized in that** the connecting means (62, 64, 70) can be disengaged by means of a key (66), such that the drawer (30) can be drawn out of the housing (10, 12), and
**in that** the connecting means (62, 64, 70) comprising a snap-in connection comprises two axial plate portions (62) each having a hook portion (64) and a plate portion (70),
wherein the hook portions (64) cooperate with the plate portion (70) formed integrally with the upper housing part (12),
wherein an end wall (40) of the drawer (30) carries a lock structure (60) comprising the two axial plate portions (62) each having the hook portion (64),
wherein the key (66) is rotatable so that the hook portions (64) come free from the plate portion (70).

2. The bait station as in claim 1, **characterized in that** the bait holding means (46) comprises an elongated holding member which can be inserted into a cavity of a bait product (56).

3. The bait station as in claim 2, **characterized in that** the bait holding means (46) is releasably connected to the housing (10, 12).

4. The bait station as in one of claims 1 to 3, **characterized in that** an intermediate wall (20) separates the interior of the housing (10, 12) into an animal receiving chamber (24) and a bait receiving chamber (26), an opening (22) being provided in the intermediate wall (20) .

5. The bait station as in one of the claims 1 to 4, **characterized in that** the bait holding means (46) carries a prismatic bait product (56).

6. The bait station as in claim 5, **characterized in that** the bait product (56) has essentially star shaped cross sectional geometry and is provided with a central bore (58).

7. The bait station as in one of the claims 1 to 6, **characterized in that** the housing (10, 12) is formed with at least two doors (14, 16).

## Patentansprüche

1. Eine Köderstation, umfassend ein im Wesentlichen geschlossenes Gehäuse (10, 12), dessen Wand mit zumindest einem Eingang (14, 16) ausgebildet ist, wobei in dem Gehäuse (10, 12) ein Köderhaltemittel (46) bereitgestellt wird, wobei das Köderhaltemittel (46) von einem Einsetzteil (30) getragen wird,
wobei das Einsetzteil (30) als ein Einschub (30) ausgebildet ist, wobei der Einschub (30) lösbar mit dem Gehäuse (10, 12) verbunden ist, und
wobei Verbindungsmittel (62, 64, 70) bereitgestellt werden, um den Einschub (30) lösbar an dem Gehäuse (10, 12) zu befestigen,
**dadurch gekennzeichnet, dass** die Verbindungsmittel (62, 64, 70) mittels eines Schlüssels (66) gelöst werden können, derart, dass der Einschub (30) aus dem Gehäuse (10, 12) herausgezogen werden kann, und
dass die Verbindungsmittel (62, 64, 70), die eine Einschnappverbindung umfassen, zwei axiale Plattenabschnitte (62) umfassen, die jeweils einen Hakenabschnitt (64) und einen Plattenabschnitt (70) aufweisen,
wobei die Hakenabschnitte (64) mit den Plattenabschnitten (70), die einstückig mit dem oberen Gehäuseabschnitt (12) ausgebildet sind, zusammenwirken,
wobei eine Endwand (40) des Einschubs (30) eine Schließstruktur (60) trägt, die zwei axiale Plattenabschnitte (62) umfasst, die jeweils einen Hakenabschnitt (64) aufweisen,
wobei der Schlüssel (66) drehbar ist, sodass die Hakenabschnitte (64) von den Plattenabschnitten (70) freiwerden.

2. Die Köderstation nach Anspruch 1, **dadurch gekennzeichnet, dass** das Köderhaltemittel (46) ein längliches Köderhalteteil umfasst, das in eine Ausnehmung eines Köderproduktes (56) eingeführt werden kann.

3. Die Köderstation nach Anspruch 2, **dadurch gekennzeichnet, dass** das Köderhaltemittel (46) lösbar mit dem Gehäuse (10, 12) verbunden ist.

4. Die Köderstation nach einem der Ansprüche 1 bis 3, **dadurch gekennzeichnet, dass** eine Zwischenwand (20) das Innere des Gehäuses (10, 12) in eine Tieraufnahmekammer (24) und eine Köderaufnahmekammer (26) trennt, wobei eine Öffnung (22) in der Zwischenwand (20) bereitgestellt wird.

5. Die Köderstation nach einem der Ansprüche 1 bis 4, **dadurch gekennzeichnet, dass** das Köderhaltemittel (46) ein prismatisches Köderprodukt (56) trägt.

6. Die Köderstation nach Anspruch 5, **dadurch gekennzeichnet, dass** das Köderprodukt (56) eine im Wesentlichen sternförmige Querschnittsgeometrie aufweist und mit einer Zentralbohrung (58) versehen ist.

7. Die Köderstation nach einem der Ansprüche 1 bis 6, **dadurch gekennzeichnet, dass** das Gehäuse (10, 12) mit zumindest zwei Türen (14, 16) ausgebildet ist.

## Revendications

1. Station d'appât comprenant un boîtier essentiellement fermé (10, 12), dont la paroi est formée avec au moins une entrée (14, 16), un moyen de maintien d'appât (46) étant prévu dans le boîtier (10, 12), où ledit moyen de maintien d'appât (46) est supporté par un élément de pièce rapportée (30),
où l'élément de pièce rapportée (30) est formé sous la forme d'un tiroir (30), ledit tiroir (30) étant relié de manière libérable au boîtier (10, 12), et
où des moyens de liaison (62, 64, 70) sont prévus pour fixer de manière libérable le tiroir (30) sur le boîtier (10, 12),
**caractérisée en ce que** les moyens de liaison (62, 64, 70) peuvent être désengagés à l'aide d'une clé (66), de telle sorte que le tiroir (30) peut être tiré hors du boîtier (10, 12), et
**en ce que** les moyens de liaison (62, 64, 70) comprenant une liaison d'emboîtement comprennent deux parties de plaque axiales (62) présentant chacune une partie de crochet (64) et une partie de plaque (70),
où les parties de crochet (64) coopèrent avec la partie de plaque (70) formée de manière solidaire avec la partie de boîtier supérieure (12),
où une paroi d'extrémité (40) du tiroir (30) supporte une structure de verrou (60) comprenant les deux parties de plaque axiales (62) présentant chacune la partie de crochet (64),
où la clé (66) peut être tournée de sorte que les parties de crochet (64) se libèrent de la partie de plaque (70).

2. Station d'appât selon la revendication 1, **caractérisée en ce que** le moyen de maintien d'appât (46) comprend un élément de maintien allongé lequel peut être inséré dans une cavité d'un produit d'appât (56).

3. Station d'appât selon la revendication 2, **caractérisée en ce que** le moyen de maintien d'appât (46) est relié de manière libérable au boîtier (10, 12).

4. Station d'appât selon l'une des revendications 1 à 3, **caractérisée en ce qu'**une paroi intermédiaire (20) sépare l'intérieur du boîtier (10, 12) en une chambre de réception d'animal (24) et une chambre de réception d'appât (26), une ouverture (22) étant prévue dans la paroi intermédiaire (20).

5. Station d'appât selon l'une des revendications 1 à 4, **caractérisée en ce que** le moyen de maintien d'appât (46) supporte un produit d'appât prismatique (56).

6. Station d'appât selon la revendication 5, **caractérisée en ce que** le produit d'appât (56) présente une géométrie en coupe transversale sensiblement en forme d'étoile et est pourvu d'un trou central (58).

7. Station d'appât selon l'une des revendications 1 à 6, **caractérisée en ce que** le boîtier (10, 12) est formé avec au moins deux portes (14, 16).
